# EUROPÄISCHE PATENTSCHRIFT

(11) **EP 2 180 955 B1**
(45) Veröffentlichungstag und Bekanntmachung des Hinweises auf die Patenterteilung: **07.09.2011**
(21) Anmeldenummer: 08784920.4
(22) Anmeldetag: 21.07.2008
(51) Int. Cl.: B05B 15/12

(54) **VERFAHREN UND VORRICHTUNG ZUM ABSCHEIDEN VON OVERSPRAY EINES FLÜSSIGEN BESCHICHTUNGSMATERIALS**
METHOD AND DEVICE FOR SEPARATING OVERSPRAY OF A LIQUID COATING MATERIAL
PROCÉDÉ ET DISPOSITIF POUR EXTRAIRE L'EXCÈS DE PROJECTION D'UN MATÉRIAU DE REVÊTEMENT LIQUIDE

(30) Priorität: 24.08.2007 DE 102007040153
(43) Veröffentlichungstag der Anmeldung: 05.05.2010
(60) Teilanmeldung: 11006179.3
(73) Patentinhaber: Dürr Systems GmbH, 74321 Bietigheim-Bissingen (DE)
(72) Erfinder: FRITZ, Hans-Georg, 73760 Ostfildern (DE); HOLZHEIMER, Jens, 71732 Tamm (DE); WIELAND, Dietmar, 71336 Waiblingen (DE)
(74) Vertreter: Heusler, Wolfgang
(86) Internationale Anmeldenummer: PCT/EP2008/005954
(87) Internationale Veröffentlichungsnummer: WO 2009/026995

(56) Entgegenhaltungen:
- DE-A1-102005 013 710
- DE-A1-102005 048 579

## Beschreibung

Die Erfindung betrifft ein Verfahren und eine Vorrichtung zum Abscheiden von Overspray eines flüssigen Beschichtungsmaterials aus einer durch einen Applikationsbereich einer Anlage zur Beschichtung von Werkstücken fließenden Luft- oder Gasströmung gemäß dem Oberbegriff der unabhängigen Patentansprüche. Hierbei handelt es sich insbesondere um eine Anlage zum automatischen Lackieren von Fahrzeugkarossen oder deren Teilen vorzugsweise mit Lackierrobotern.

Verfahren und Vorrichtungen dieser Gattung sind insbesondere aus WO 2007/039276 A1 und WO 2007/039275 A1 sowie aus DE 10 2005 013 708 A1, DE 10 2005 013 709 A1, DE 10 2005 013 710 A1 und DE 10 2005 013 711 A1 bekannt. Nach diesen Systemen erfolgt die trockene Abtrennung des Nasslack-Oversprays aus dem Abluftstrom der Sprühkabine in einer Filtervorrichtung, nachdem mit einer Düsenanordnung zuvor ein fließfähiges, partikelförmiges, sogenanntes Precoat-material in den Abluftstrom abgegeben wurde. Der Zweck des Precoatmaterials besteht im bekannten Fall darin, sich als Sperrschicht an den Filteroberflächen abzusetzen, um zu verhindern, dass diese Flächen durch anhaftende Overspraypartikel verkleben, "entklebende" Eigenschaften dieser Partikel beruhen überwiegend auf geringer Größe und der daraus resultierenden großen spezifischen Oberfläche und auf der Oberflächenstruktur. Als Precoatmaterial, das mit dem Overspray in der Filtervorrichtung abgeschieden wird, soll insbesondere Kalk, Steinmehl, Aluminiumsilikate, Aluminiumoxide, Siliziumoxide, Pulverlack oder Ähnliches verwendet werden. Durch periodisches Reinigen der Filtervorrichtung gelangt das Gemisch aus Precoatmaterial und Nasslack-Overspray in Aufnahmebehälter, aus denen es teilweise einer erneuten Verwendung als Precoatmaterial zugeführt werden kann. Bei zu hoher Lackkonzentration muss das Gemisch dagegen aus der Lackieranlage entfernt und üblicherweise als Hausmüll entsorgt, also verbrannt oder deponiert werden. Diese Entsorgung ist wegen der an sich wertvollen Inhaltsstoffe nicht sinnvoll.

Aus DE 4211465 C2 ist ein anderes Verfahren der eingangs genannten Gattung bekannt, das zum trockenen Abscheiden, Wiedergewinnen und Aufarbeiten eines beim Spritzlackieren anfallenden Nebels aus klebrigen Lackteilchen aus dem Absaugeluftstrom dient. Bei diesem Verfahren erfolgt die Zugabe eines lackverträglichen, auf die Verwertung des abgeschiedenen Nebels abgestellten Hilfsstaubes. Zur Verwertung wird ein Teil des rückgewonnenen Hilfsstaubes wieder in den Kreislauf durch die Kabine eingeführt, während der andere Teil zur Aufarbeitung dieses Anteils zu neuem Lack unter Zusatz von frischen Lackrohstoffen und/oder Lösemitteln ausgeschleust und durch frischen Hilfsstaub ergänzt wird. Als lackverträgliche Hilfsstäube sollen Farbpigmente oder anorganische Füllstoffe verwendet werden.

Ausgehend von dem geschilderten Stand der Technik liegt der Erfindung die Aufgabe zugrunde, ein Verfahren bzw. eine entsprechende Vorrichtung mit einem Hilfsmaterial anzugeben, das eine bessere Bindung des Oversprays ermöglicht als bisher und im Übrigen besser an die Erfordernisse einer automatischen Beschichtungsanlage angepasst werden kann.

Die Lösung dieser Aufgabe sowie Ausgestaltungen und Weiterbildungen der Erfindung sind in den Patentansprüchen angegeben.

Um die Aufnahmefähigkeit des nachfolgend auch als Precoatmaterial bezeichneten Hilfsmittels für Overspray zu erhöhen, können speziell aufbereitete oder mittels spezieller Prozesse hergestellte Stoffe eingesetzt werden. Beispielsweise können Partikel mit einer großen inneren Oberfläche wie z. B. Zeolithe verwendet werden, also natürliche oder auch künstlich hergestellte hydratisierte Alumosilikate. Sie besitzen aufgrund ihrer Hohlraumstruktur mit zahlreichen Poren und Kanälen eine relativ große innere Oberfläche, die eine außergewöhnlich hohe und spezifische Ionenaustausch-, Adsorptionsund Hydratationsfähigkeit aufweist (1 g Zeolith kann eine Oberfläche von bis zu 1000 m² aufweisen).

Ebenso sind im Handel erhältliche Hohlkugeln aus Polymeren, Glas oder Aluminiumsilikat usw. verwendbar, vorzugsweise mit für Lackpartikel von außen zugänglichen Innenräumen, um eine Verbesserung des Aufnahmevermögens zu ermöglichen.

Zu demselben Zweck besteht weiter die Möglichkeit, Fasern aus unterschiedlichen Materialien natürlichen Ursprungs wie z. B. Baumwolle, Zellulose, Wollastonit, Attapulgit und Sepiolith oder aus synthetischer Produktion wie Glas-, Keramik-, Gips-, Kohlenstoff- oder Polymerfasern od. dgl. einzusetzen.

Durch die Faser- und/oder Hohlraumstruktur derartiger Stoffe mit relativ zu ihren Außenabmessungen großen inneren und/oder äußeren Oberflächen werden Lackpartikel wirksam in die Precoatpartikel eingesogen.

Anstatt oder vorzugsweise zusätzlich zu Partikeln können erfindungsgemäß als Hilfsmittel oder Zusatzmittel auch flüssige oder gasförmige Fluide verwendet werden.

In bestimmten Fällen kann es zweckmäßig oder sogar erforderlich sein, den Overspray nicht oder nicht nur physikalisch, sondern chemisch z.B. an der Oberfläche des Precoatmaterials zu binden. Entweder besitzt das Precoatmaterial hierfür reaktive Gruppen wie z. B. Amin-, Epoxid-, Carboxyl-, Hydroxyl-oder Isocyanatgruppen, oder dem Precoatmaterial werden Stoffe beigemischt, die diese Gruppen auf Ihrer Oberfläche besitzen. Diese Stoffe können z. B. feste oder flüssige Monomere, Oligomere oder Polymere oder Silane, Silanole oder Siloxane sein mit der Maßgabe, dass die erfindungsgemäß verwendeten Stoffe keine Lackstörungen verursachen sollen. Ein anderes Beispiel für einen verwendbaren chemisch reaktiven Stoff ist ein im Handel (unter der Bezeichnung AEROXIDE Alu C 805) erhältliches Aluminiumoxid, das mit Octylsilan nachbehandelt ist. Alle hier genannten Stoffe können einzeln oder als Gemisch unterschiedlicher Stoffe verwendet werden. Generell ist erfindungsgemäß die Mischung aus zwei oder mehr unterschiedlichen Komponenten zu bevorzugen, mit denen neben der Fähigkeit zur Bindung und/oder Aufnahme von Lackpartikeln eine Optimierung wichtiger Prozesseigenschaften wie z. B. die Fördereigenschaften einschließlich Fluidisierbarkeit und Fließfähigkeit erreicht wird. Als Additive zur Verbesserung der Fließfähigkeit und Fluidisierbarkeit kommen beispielsweise feinteiliges Aluminiumoxid oder feinteilige oder hochdisperse (pyrogene) Kieselsäuren zum Einsatz. Aufgrund ihrer großen spezifischen Oberflächen können diese Stoffe zugleich das Aufnahmevermögen des Hilfsmaterials verbessern.

Bevorzugt werden Additive, die selbst nicht flüchtig sind und nicht infolge einer ungewollten chemischen Reaktion mit dem Hilfsmaterial oder dem Lack zu schädlichen flüchtigen Substanzen führen.

Flüssige oder gasförmige Stoffe oder Fluide können als Zusatz zu partikel- oder staubförmigem Precoatmaterial vorzugsweise durch Düsen in die den Overspray beaufschlagende Luft- oder sonstige Gasströmung und/oder in das Precoatmaterial eingesprüht werden. Beispielsweise kann das Fluid durch Aufwirbeldüsen eingesprüht werden, die sich an speziellen Aufnahmebehältern befinden können, in die das partikelförmige Precoat-material gefördert wird, wie in der gleichzeitigen PCT-Anmeldung PCT/EP 2008/005961 (EP 087849279 entsprechend DE 10 2007 040 154.1) beschrieben ist.

Ein zweckmäßiges Beispiel für eine als Zusatz zu dem partikelförmigen Precoatmaterial geeignete Flüssigkeit ist ein hydrolysiertes Amin wie NH₄OH als Ergebnis einer wässrigen Lösung von NH₃. Bei Umsetzung eines hydrolysierten Amins mit einem Ester (Verseifung) erhält man reaktive Aminsalze der dem jeweiligen Ester entsprechenden Säure. Allgemeiner können sich für die Erfindung Flüssigkeiten eignen, die reaktive Moleküle oder Substanzen enthalten, also auch Lösungen von Salzen oder löslichen Stoffen. Das Amin reagiert insbesondere chemisch mit manchen Lackbestandteilen und soll dem Gemisch aus Overspray und Precoatmaterial die Klebrigkeit nehmen. Je geringer dessen Klebrigkeit ist, desto besser lässt es sich fluidisieren, aufwirbeln und (ab-)transportieren, und desto höher kann der Anteil des Lack-Oversprays im Precoatmaterial sein, bevor es verworfen und durch frisches Material ersetzt werden muss, so dass sich eine geringere Abfallmenge ergibt, falls das verworfene Precoatmaterial nicht für andere Zwecke wiederverwertet werden soll. Die beispielsweise aminhaltige Flüssigkeit soll vorzugsweise in dem Filterbereich in das fluidisierte Precoatmaterial eingespritzt werden, beispielsweise durch die oben erwähnten, ggf. bereits vorhandenen Aufwirbeldüsen an den Aufnahmebehältern des Preocoatmaterials. Als ebenfalls zusätzlich zu dem partikelförmigen Precoatmaterial verwendbares gasförmiges Hilfsmittel kommen z.B. Ammoniak (NH₃) oder andere Gase insbesondere mit reaktiven Gruppen oder allgemeiner Moleküle mit reaktiven Gruppen in Betracht, die zumindest bei Temperaturen ab 20°C flüchtig sind. Es ist denkbar, kurzkettige, flüchtige Substanzen bzw. Oligomere zu synethetisieren, die die hier und weiter oben erwähnten reaktiven Gruppen enthalten können.

Als dem erfindungsgemäßen Hilfsmaterial beizumischende Stoffe kommen auch die bei den eingangs erwähnten bekannten Verfahren verwendeten Precoatpartikel einschließlich Pulverlack in Betracht.

Die Zugabe der beschriebenen Additive oder Zuschlagstoffe kann in einem separaten Prozess erfolgen, also mit Anlieferung der gebrauchsfertigen Mischung an den Anlagenbetreiber, oder auch während des Lackierprozesses. Die Zugabe während des Lackierprozesses kann in speziellen Fällen in Abhängigkeit von der anfallenden Overspraymenge erfolgen.

Generell können die erfindungsgemäß zu verwendenden Stoffe zweckmäßig zur Anpassung an das in der Anlage jeweils eingesetzte Lackmaterial ausgewählt werden.

Durch die Verwendung eines geeigneten Gemisches kann die Aufnahmefähigkeit des Hilfsmaterials für Lack wesentlich gesteigert werden, woraus geringere Betriebskosten und ein weniger für Störungen empfindlicher Prozess resultieren. Im Übrigen ist ein wesentlicher Vorteil der Erfindung darin zu sehen, dass durch die Mischung von mehreren Komponenten das Hilfsmaterial optimal und wesentlich besser als durch Verwendung einzelner reiner Rohstoffe wie bei den eingangs beschriebenen bekannten Verfahren an den Verwendungszweck und an die Erfordernisse einer automatischen Beschichtungsanlage angepasst werden kann.

Das Hilfsmittel kann nach Gebrauch wie bei den bekannten Verfahren teilweise in der Beschichtungsanlage wiederverwendet werden. Gemäß einem anderen, für die Optimierung des Betriebs von Beschichtungsanlagen ebenfalls wichtigen Aspekt der Erfindung kann es aber ferner zweckmäßig sein, die Stoffe des Hilfsmaterials so zu wählen, dass sie nach Gebrauch in der Beschichtungsanlage nicht nutzlos und kostspielig entsorgt werden müssen, sondern für andere Zwecke als für die Beschichtung von Werkstücken verwertet werden können. Ein Beispiel hierfür ist die Verwendung des erfindungsgemäßen Hilfsmaterials als Dämmmaterial. Ein besonders sinnvolles und typisches anderes Beispiel ist eine thermische Verwertung in der Ziegel- oder Zementindustrie oder dergleichen, wo der beispielsweise als Additiv oder Zuschlagstoff vorhandene anorganische Bestandteil in das gewünschte Erzeugnis eingeht, während gleichzeitig der Lackanteil als Energieträger bei einem für die Produktion erforderlichen Verbrennungsvorgang genutzt werden kann.

An dem in der Zeichnung dargestellten Ausführungsbeispiel wird die Erfindung erläutert. Die dargestellte und nachfolgend beschriebene Lackieranlage ist an sich nicht Gegenstand der Erfindung, sondern aus der WO 2007/039276 A1 bekannt. Es zeigen:
- Fig. 1: eine schematische perspektivische Darstellung der Be- schichtungsanlage;
- Fig. 2: einen schematischen vertikalen Schnitt durch einen Precoat- Vorlagebehälter; und

- Fig. 3: eine schematische Ansicht eines Injektors für Preco- at-Material in dem Vorlagebehälter gemäß Fig. 2.

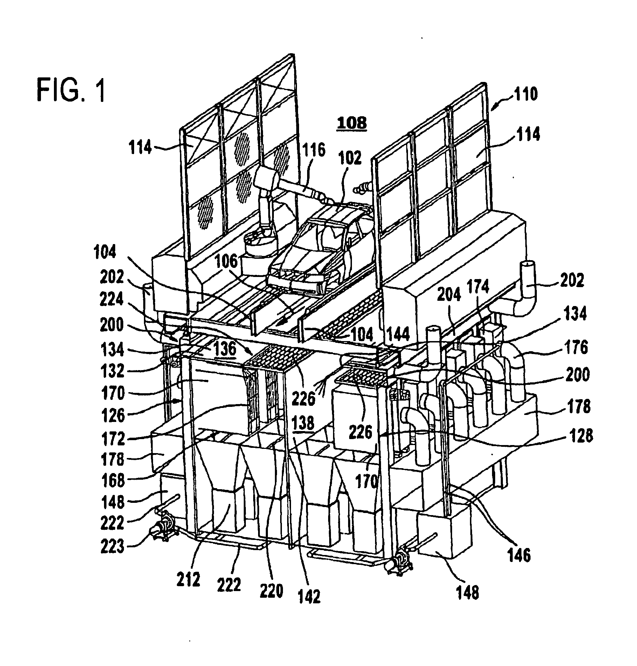

Die in Fig. 1 dargestellte Lackieranlage für Fahrzeugkarossen 102 umfasst eine Fördervorrichtung 104, mittels der die Fahrzeugkarossen 102 in einer Förderrichtung 106 durch den Applikationsbereich 108 einer als Ganzes mit 110 bezeichneten Lackierkabine bewegt werden können. Der Applikationsbereich 108 ist der Innenraum der Lackierkabine 110, die in ihrer senkrecht zur Förderrichtung 106, also zu der Längsrichtung der Lackierkabine 110 verlaufenden horizontalen Querrichtung zu beiden Seiten der Fördervorrichtung 104 durch jeweils eine Kabinenwand 114 begrenzt ist. Zu beiden Seiten der Fördervorrichtung 104 sind in der Lackierkabine 110 Lackiermaschinen 116 beispielsweise in Form von Lackierrobotern angeordnet.

Mittels eines (nicht dargestellten) Umluftkreislaufs wird ein Luftstrom erzeugt, der den Applikationsbereich 108 im Wesentlichen vertikal von oben nach unten durchsetzt. Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen. Bei Verwendung von Nasslack besteht der Nasslack-Overspray aus Lacktröpfchen. Die meisten der OversprayPartikel haben eine größte Abmessung im Bereich von ungefähr 1 µm bis ungefähr 100 µm.

Der Abluftstrom verlässt die Lackierkabine 110 nach unten und gelangt in eine als Ganzes mit 126 bezeichnete Vorrichtung zum Abtrennen von Nasslack-Overspray aus dem Abluftstrom, welche unterhalb des Applikationsbereichs 108 angeordnet ist. Die Vorrichtung 126 umfasst eine im Wesentlichen quaderförmige Strömungskammer 128, die sich in der Förderrichtung 106 über die ganze Länge der Lackierkabine 110 hinweg erstreckt und in der Querrichtung der Lackierkabine durch vertikale Seitenwände begrenzt ist, die im Wesentlichen mit den seitlichen Kabinenwänden 114 der Lackierkabine 110 fluchten, so dass die Strömungskammer 128 im Wesentlichen dieselbe horizontale Querschnittsfläche aufweist wie die Lackierkabine 110 und im Wesentlichen vollständig innerhalb der vertikalen Projektion der Grundfläche der Lackierkabine 110 angeordnet ist. Die Strömungskammer 128 ist durch Strömungsleitelemente 132, welche in diesem Ausführungsbeispiel als im Wesentlichen horizontal ausgerichtete Strömungsleitfläche 134 ausgebildet sind, in einen oberen Abschnitt 136 und einen unteren Abschnitt 138 unterteilt. Die Abschnitte 136 und 138 sind durch eine Engstelle miteinander verbunden, welche die Form eines Spalts zwischen den einander gegenüberliegenden freien Rändern der Strömungsleitelemente 132 hat und eine Verengung im Strömungsweg des Abluftstroms durch die Strömungskammer 128 bildet. Die horizontale Querschnittsfläche der Engstelle beträgt ungefähr 35 % bis ungefähr 50 % der horizontalen Querschnittsfläche der Strömungskammer 128 auf der Höhe der Engstelle. Die Luftgeschwindigkeit des Abluftstroms im Bereich der Engstelle kann zwischen ungefähr 0,6 m/s und ungefähr 2 m/s liegen. Der untere Abschnitt 138 der Strömungskammer 128 ist durch eine vertikale, parallel zur Förderrichtung 106 verlaufende Trennwand 142 in zwei Teilabschnitte unterteilt.

In den engstellenseitigen Rand jedes der Strömungsleitelemente 132 ist jeweils eine Precoat-Zuführeinrichtung 144 in Form einer sich in der Förderrichtung 106 erstreckenden Precoatierlanze integriert. Jede der Precaotierlanzen kann einen Durchmesser von beispielsweise etwa 30 mm haben und mit einer Vielzahl von Zerstäuberdüsen versehen sein, welche in einem Abstand von ungefähr 50 mm bis ungefähr 100 mm in der Längsrichtung der Precoatierlanze angeordnet sein und eine Öffnungsgröße im Bereich von ungefähr 3 mm bis ungefähr 15 mm aufweisen können. Diese Zerstäuberdüsen der Precoatierlanzen geben beispielsweise intervallweise ein Precaot-Material in Form eines Sprühnebels in den Abluftstrom ab.

Die Precoat-Zuführeinrichtungen 144 sind jeweils über eine oder mehrere Precoat-Zuführleitungen 146 mit jeweils einem Precaot-Vorlagebehälter 148 verbunden, in welchem das Precoat-Material in fließfähigem Zustand (fluidisiert) gespeichert wird. Das Precoat-Material kann entsprechend dem Stand der Technik aus Partikeln bestehen, welche beispielsweise einen mittleren Durchmesser im Bereich von ungefähr 10 µm bis ungefähr 100 µm aufweisen, aber auch größer oder kleiner sein können.

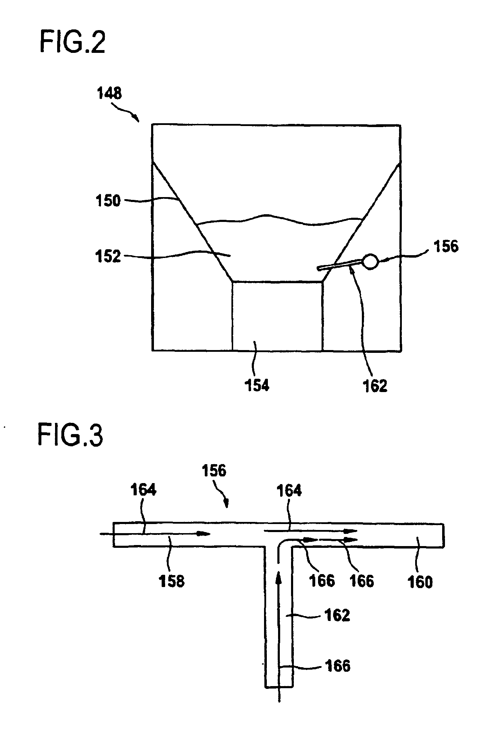

Der Aufbau eines der Precoat-Vorlagebehälter 148 ist in Fig. 2 im Einzelnen dargestellt. Im Inneren des Vorlagebehälters 148 befindet sich eine Speicherkammer 150, die sich trichterförmig nach unten verjüngt und ein Fluidbett 152 aus fließfähigem Precoat-Material enthält, welches oberhalb eines Druckluftraums 154 angeordnet ist. Aus der Speicherkammer 150 wird das Precoat-Material mittels eines Injektors 150 gefördert, der in Fig. 3 im Einzelnen dargestellt ist. Der Injektor 156 hat die Form eines T-Stücks mit einem Druckluftanschluss 158, einem Anschluss 160 für eine Precoat-Zuführleitung 146 und mit einer Stichlanze 162, die in das Fluidbett 152 in der Speicherkammer 150 hineinragt. Zum Fördern von Precoat-Material wird der Injektor 156 von seinem Druckluftanschluss 158 her zu dem Aschluss 160 für die Precaot-Zuführleitung 146 hin mit Druckluft (unter einem Druck von beispielsweise ungefähr 5 bar) durchströmt, wie in Fig. 3 durch die Pfeile 164 angedeutet ist. Durch diese Druckluftströmung entsteht bekanntlich ein Sogeffekt, aufgrund dessen das fluidisierte Precoat-Material aus dem Fluidbett 152 durch die Stichlanze 162 in den Injektor 156 gesaugt wird und durch den Anschluss 160 in die Precoat-Zuführleitung 146 gelangt. Die Precoat-Strömung durch den Injektor 156 ist in Fig. 3 durch die Pfeile 166 angedeutet.

In den Teilabschnitten des unteren Abschnitts 138 der Strömungskammer 128 ist zu beiden Seiten der Engstellen jeweils eine Abtrennvorrichtung 168 zum Abtrennen von Nasslack-Overspray aus dem Abluftstrom vorgesehen. Die Abtrennvorrichtungen 168 umfassen jeweils mehrere, an den beiden einander gegenüberliegenden vertikalen Seitenwänden der Strömungskammer 128 angeordnete, in der Förderrichtung 106 voneinander beabstandete, regenerierbare Oberflächenfilter 170, die mit ihren Filterelementen 172 in den unteren Abschnitt 138 der Strömungskammer 128 hineinragen. Jedes der regenerierbaren Oberflächenfilter 170 umfasst einen hohl ausgebildeten Grundkörper, an welchem mehrere, beispielsweise im Wesentlichen plattenförmig ausgebildete Filterelemente 172 gehalten sind. Die Filterelemente 172 können beispielsweise Platten aus gesindertem Polyethylen sein, die an ihrer Außenfläche mit einer Membran aus Polytetrafluorethylen (PTFE) versehen sind. Die Beschichtung aus PTFE dient dazu, die Filterklasse des Oberflächenfilters 170 zu erhöhen, also dessen Durchlässigkeit zu verringern, und soll ferner das permanente Anhaften des aus dem Abluftstrom abgetrennten Nasslack-Oversprays verhindern. Sowohl das Grundmaterial der Filterelemente 172 als auch deren PTFE-Beschichtung haben eine Porösität, so dass die Abluft durch die Poren in den Innenraum des jeweiligen Filterelements 172 gelangen kann.

Um das Verkleben der Filteroberflächen zu verhindern, werden diese ferner mit einer Sperrschicht aus in den Abluftstrom abgegebenem Precoat-Material versehen. Diese Sperrschicht bildet sich im Betrieb der Vorrichtung 126 durch Abscheidung des in den Abluftstrom abgegebenen Precoat-Materials an den Filteroberflächen und verhindert, dass die Filteroberflächen durch anhaftenden Nasslack-Overspray verkleben. Precoat-Material aus dem Abluftstrom setzt sich auch an den Begrenzungswänden des unteren Abschnitts 138 der Strömungskammer 128 ab, wo es ebenfalls ein Anhaften von Nasslack-Overspray verhindert.

Der Abluftstrom überstreicht die Oberflächen der Filterelemente 172 der regenerierbaren Oberflächenfilter 170, wobei sowohl das mitgeführte Precoat-Material als auch der mitgeführte Nasslack-Overspray an den Filteroberflächen abgeschieden werden, und gelangt durch die porösen Filteroberflächen in die Innenräume der Filterelemente 172, die mit einem Hohlraum innerhalb eines Grundkörpers 174 des jeweiligen Oberflächenfilters 170 verbunden sind. Der gereinigte Abluftstrom gelangt somit durch den Grundkörper 174 in jeweils ein Abluftrohr 176, das von dem jeweiligen regenerierbaren Oberflächenfilter 170 zu einem seitlich neben einer vertikalen Seitenwand der Strömungskammer 128 und parallel zu der Förderrichtung 106 verlaufenden Abluftkanal 178 führt. Die von dem Nasslack-Overspray gereinigte Abluft aus den beiden Abluftkanälen 178 gelangt durch eine Abluftsammelleitung zu einem Umluftgebläse (nicht dargestellt), von wo die gereinigte Abluft über ein Kühlregister einer oberhalb des Applikationsbereiches 108 angeordneten Luftkammer, dem sogenannten Plenum, zugeführt wird. Von dort gelangt die gereinigte Abluft über eine Filterdecke in den Applikationsbereich 108 zurück. Ein an die Umgebung abgegebener Teil des Abluftstroms wird durch Frischluft ersetzt, die einer Zuluftanlage über eine Frischluftzuführleitung zugeführt wird. Die Frischluft wird in die Strömungskammer 128 über zwei Luftschleiererzeugungsvorrichtungen 200 eingespeist, die über jeweils eine Zuluftleitung 202 mit der Zuluftanlage verbunden sind und jeweils eine sich längs der Förderrichtung 106 erstreckende Zuluftkammer 204 haben, die über die Zuluftleitungen 202 mit Zuluft gespeist wird. Die Zuluftanlage umfasst ein (nicht dargestelltes) Kühlregister, mit dem die in den Luftschleiererzeugungsvorrichtungen 200 zugeführte Luft so gekühlt wird, dass sie kälter ist als der aus dem Applikationsbereich austretende Abluftstrom, wodurch erreicht wird, dass die über die Luftschleiererzeugungsvorrichtung 200 zugeführte Luft in der Strömungskammer 128 nach unten, also zu den zu schützenden Oberflächen der Strömungsleitelemente 132 hin sinkt. Beim Weiterströmen dieser gekühlten Zuluft durch den unteren Abschnitt 138 der Strömungskammer 128, durch die Abluftkanäle 178 und durch die Abluftsammelleitung vermischt sich diese gekühlte Zuluft mit dem Abluftstrom aus dem Applikationsbereich 108, so dass die Erwärmung der über die Zuführleitung erneut dem Applikationsbereich zugeführten gereinigten Abluft durch das Umluftgebläse teilweise kompensiert wird. Der Großteil der durch den Applikationsbereich 108 hindurchgeführten Luft wird somit in einem Umlaufkreislauf geführt, der den Applikationsbereich 108, die Strömungskammer 128, die Abluftkanäle 178, die Abluftsammelleitung, das Umluftgebläse, die Zuführleitung und die Luftkammer über dem Applikationsbereich 108 umfasst, wobei eine ständige Aufheizung der im Umluftkreislauf geführten Luft vermieden wird.

Da die Abtrennung des Nasslack-Oversprays aus dem Abluftstrom 120 mittels der Oberflächenfilter 170 trocken, das heißt ohne Auswaschung mit einer Reinigungsflüssigkeit erfolgt, wird die in dem Umluftkreislauf geführte Luft beim Abtrennen des Nasslack-Oversprays nicht befeuchtet, so dass auch keinerlei Vorrichtungen zur Entfeuchtung der in dem Umluftkreislauf geführten Luft erforderlich sind. Ferner sind auch keine Vorrichtungen zur Abtrennung von Nasslack-Overspray aus einer Auswasch-Reinigungsflüssigkeit erforderlich.

Die regenerierbaren Oberflächenfilter 170 können in bestimmten Zeitintervallen, wenn ihre Beladung mit Nasslack-Overspray ein vorgegebenes Maß erreicht hat, durch Druckluftimpulse abgereinigt werden. Nach dem Abreinigen wird durch Zugabe von Precoat-Material in den Abluftstrom mittels der Precoat-Zuführeinrichtungen 144 eine neue Sperrschicht an den Filteroberflächen erzeugt, wobei die Sperrschicht aus 100 % nasslackfreiem Precoat-Material oder auch aus nasslackbeladenem Precoat-Material bestehen kann.

Das von den Filteroberflächen der Filter 170 abgereinigte, nasslackhaltige Material gelangt in Precoat-Aufnahmebehälter 212, von denen mehrere im unteren Abschnitt 138 der Strömungskammer 128 so angeordnet sind, dass ihre nach oben gewandten Mündungsöffnungen im Wesentlichen den gesamten horizontalen Querschnitt der Strömungskammer 128 überdecken. Auf diese Weise ist gewährleistet, dass das gesamte von den Oberflächenfiltern 170 abgereinigte Material sowie das bereits vor Erreichen der Oberflächenfilter 170 aus dem Abluftstrom abgetrennte Precaot- und Overspray-Material durch die Mündungsöffnungen in die Precoat-Aufnahmebehälter 212 gelangt. Jede der Precoat-Aufnahmebehälter kann ein sich nach unten hin trichterförmig verjüngendes Oberteil und ein im Wesentlichen quaderförmiges Unterteil haben. Nahe der oberen Mündungsöffnung ist jedes Oberteil eines Precoat-Aufnahmebehälters 212 mit einer das Oberteil querenden Druckluftlanze 220 versehen, mit der das in dem Oberteil befindliche Material mit einem Druckluftpuls beaufschlagt und somit aufgewirbelt werden kann. Das aufgewirbelte Material kann durch die Mündungsöffnung nach oben gelangen und sich beispielsweise an den Filteroberflächen der Oberflächenfilter 170 oder an der vertikalen Trennwand 142 absetzen, welche durch die Beschichtung mit dem Precoat-Material vor dem Anhaften von Nasslack-Overspray aus dem Abluftstrom geschützt wird.

Aus den Unterteilen der Precoat-Aufnahmebehälter 212 kann das darin enthaltene Material, also ein Gemisch aus Precoat-Material und Nasslack-Overspray durch jeweils eine Absaugleitung 222, in der eine Precoat-Absaugpumpe 223 angeordnet ist, in jeweils einen der Precoat-Vorlagebehälter 148 gefördert werden, um von dort aus in der beschriebenen Weise durch die Precoat-Zuführleitung 146 einer erneuten Verwendung als Precoat-Material zugeführt zu werden.

Außer den Precoat-Vorlagebehältern 148, aus denen der Zuführleitung 146 nasslackbeladenes Precoat-Material zugeführt wird, kann die Vorrichtung 126 auch weitere Precoat-Vorlagebehälter umfassen, die nicht mit den Aufnahmebehältern 212 verbunden sind, sondern mit nasslackfreiem Precoat-Material befüllt sind, um der Precoat-Zuführleitung 146 wahlweise nasslackfreies Precoat-Material zuzuführen. Diese Zwischenprecoatierung der Oberflächenfilter 170 und der vertikalen Trennwand 142 kann in Zeitintervallen von beispielsweise ungefähr 15 Min. bis ungefähr 1 Stunde durchgeführt werden. Um zu verhindern, dass während dieser Zwischenprecoatierungsvorgänge oder während des Abreinigungsvorgangs und der anschließenden Precoatierung der Oberflächenfilter 170 Precoat-Material durch die Engstelle in den Applikationsbereich 108 oder Nasslack-Overspray durch die Engstelle zu den Oberflächenfiltern 170 gelangt, wird die Engstelle während dieser Vorgänge mittels Verschließvorrichtungen 226 geschlossen.

Das oben beschriebene Ausführungsbeispiel kann im Rahmen der Erfindung in verschiedener Hinsicht abgewandelt werden. Beispielsweise ist es möglich, statt des mit dem Injektor 156, also wie eine Pumpe arbeitenden Vorlagebehälters 148 einen einfachen Fluidisierungsbehälter zu verwenden und das fluidisierte Hilfsmaterial mit einer nachgeschalteten Pumpe zu fördern. Hierfür geeignete, insbesondere nach dem Dichtstromund Saug/Druck-Prinzip dosierende Pumpen sind an sich bekannt, beispielsweise aus EP 1 427 536 B1, WO 2004/087331 A1 oder Fig. 3 der DE 101 30 173 A1. Stattdessen könnte als Vorlagebehälter auch ein sogenannter Blowpot verwendet werden, wie er im Prinzip z. B. aus JP 02123025 A oder JP 06278868 A bekannt ist.

Ferner bestehen Möglichkeiten, das Precoatmaterial auf andere Weise als mit der oben beschriebenen Vorrichtung 144 in die die Overspraypartikel enthaltende Luftströmung einzubringen. Insbesondere kann es bevorzugt sein, das frische Hilfsmaterial vor der Beaufschlagung des Oversprays zunächst in ähnlich wie die Behälter 212 unter dem Applikationsbereich 108 verteilte Aufnahmebehälter zu fördern, von wo das Hilfsmaterial dann in die Luftströmung gelangt, wie in der oben ensähnten gleichzeitigen PCT-Anmeldung (entsprechend DE 10 2007 040 154.1) beschrieben ist.

## Patentansprüche

1. Verfahren zum Abscheiden von Overspray eines flüssigen Beschichtungsmaterials aus einer durch einen Applikationsbereich (108) einer Anlage zur Beschichtung von Werkstücken fließenden Luft- oder anderen Gasströmung,
wobei der in dem Applikationsbereich (108) in die Gasströmung gelangte Overspray mit mindestens einem in die Gasströmung eingeführten Hilfsmittel beaufschlagt wird,
**dadurch gekennzeichnet, dass** als Hilfsmittel zur Bindung des Oversprays wenigstens zum Teil ein chemisch mit dem Overspray reagierendes Partikelmaterial oder Fluid verwendet wird.

2. Verfahren nach Anspruch 1, **dadurch gekennzeichnet, dass** als Hilfsmittel eine Mischung aus zwei oder mehr verschiedenen Stoffen verwendet wird.

3. Verfahren nach einem der vorhergehenden Ansprüche, **dadurch gekennzeichnet, dass** ein oder mehrere flüssige oder gasförmige chemisch reaktive Fluide zusätzlich zu partikelförmigem Precoatmaterial verwendet und in die den Overspray beaufschlagende Luft- oder Gasströmung und/oder in das Precoatmaterial gesprüht werden.

4. Verfahren nach einem der vorhergehenden Ansprüche, **dadurch gekennzeichnet, dass** chemisch reaktive Partikel verwendet werden, die aus Amin-, Epoxid-, Carboxyl-, Hydroxyl- oder Isocyanatgruppen gewählt werden oder eine solche reaktive Gruppe auf ihrer Oberfläche besitzen.

5. Verfahren nach einem der vorhergehenden Ansprüche, **dadurch gekennzeichnet, dass** chemisch reaktive Partikel verwendet werden, die aus mit Octylsilan nachbehandeltem Aluminiumoxid bestehen oder diesen Stoff auf ihrer Oberfläche besitzen.

6. Verfahren nach einem der vorhergehenden Ansprüche, **dadurch gekennzeichnet, dass** feste oder flüssige Mono-, Oligo-oder Polymere oder Silane, Silanole oder Siloxane verwendet werden.

7. Verfahren nach einem der vorhergehenden Ansprüche, **dadurch gekennzeichnet, dass** als flüssiges Fluid hydrolysiertes Amin oder sonstige reaktive Flüssigkeiten einschließlich reaktive Moleküle oder Substanzen enthaltenden Lösungen verwendet werden.

8. Verfahren nach einem der vorhergehenden Ansprüche, **dadurch gekennzeichnet, dass** als Hilfsmittel zur Aufnahme des Obersprays wenigstens zum Teil Partikel mit einer Faser- oder Hohlraumstruktur verwendet werden.

9. Verfahren nach einem der vorhergehenden Ansprüche, **dadurch gekennzeichnet, dass** als Partikel mit einer Hohlraumstruktur Zeolithe oder andere hohle Körper aus Polymeren, Glas oder Aluminiumsilikat verwendet werden.

10. Verfahren nach einem der vorhergehenden Ansprüche, **dadurch gekennzeichnet, dass** dem Hilfsmittel Aluminiumoxid und/oder pyrogene Kieselsäure und/oder andere Additive zur Verbesserung der Fließfähigkeit und/oder Fluidisierbarkeit zugemischt werden.

11. Verfahren nach einem der vorhergehenden Ansprüche, **dadurch gekennzeichnet, dass** die Gasströmung zum Abtrennen der Overspraypartikel durch eine Filtervorrichtung (168) geleitet wird.

12. Verfahren nach einem der vorhergehenden Ansprüche oder nach dem Oberbegriff des Anspruchs 1, **dadurch gekennzeichnet, dass** ein Hilfsmittel gewählt wird, das sich nach der Entfernung aus der Beschichtungsanlage zur Verwertung für andere Zwecke als der Beschichtung von Werkstücken eignet.

13. Verfahren nach Anspruch 12, **dadurch gekennzeichnet, dass** das gebrauchte Hilfsmaterial als Dämmstoff verwendet wird.

14. Verfahren nach Anspruch 12, **dadurch gekennzeichnet, dass** das gebrauchte Hilfsmaterial bei der thermischen Herstellung von Ziegeln oder Zement oder anderen Gegenständen mit anorganischen Bestandteilen verwertet wird.

15. Vorrichtung zum Abscheiden von Overspray eines flüssigen Beschichtungsmaterials aus einer durch einen Applikationsbereich (108) einer Anlage zur Beschichtung von Werkstücken fließenden Luft- oder anderen Gasströmung,
mit einer Abtrennvorrichtung (168), in welcher der in dem Applikationsbereich (108) in die Gasströmung gelangte Overspray mit mindestens einem in die Gasströmung eingeführten Hilfsmittel beaufschlagt wird,
**dadurch gekennzeichnet, dass** als Hilfsmittel zur Bindung des Oversprays wenigstens zum Teil ein chemisch mit dem Overspray reagierendes Partikelmaterial oder Fluid vorgesehen ist.

16. Vorrichtung nach Anspruch 15, **dadurch gekennzeichnet, dass** die Abtrennvorrichtung (168) Filterelemente (170, 172) enthält, durch die die Gasströmung geleitet wird.

17. Vorrichtung nach Anspruch 15 oder 16, **dadurch gekennzeichnet, dass** als Hilfsmittel eine Mischung aus zwei oder mehr verschiedenen Stoffen vorgesehen ist.

18. Vorrichtung nach einem der Ansprüche 15 bis 17, **dadurch gekennzeichnet, dass** chemisch reaktive Partikel vorgesehen sind, die aus Amin-, Epoxid-, Carboxyl-, Hydroxyl- oder Isocyanatgruppen gewählt werden oder eine solche reaktive Gruppe auf ihrer Oberfläche besitzen.

19. Vorrichtung nach einem der Ansprüche 15 oder 18, **dadurch gekennzeichnet, dass** feste oder flüssige Mono-, Oligo-oder Polymere oder Silane, Silanole oder Siloxane vorgesehen sind.

20. Vorrichtung nach einem der Ansprüche 15 bis 19, **dadurch gekennzeichnet, dass** ein oder mehrere flüssige oder gasförmige chemisch reaktive Fluide zusätzlich zu partikelförmigem Precoatmaterial verwendet und vorzugsweise durch Düsen in die den Oberspray beaufschlagende Luft- oder Gasströmung und/oder in das Precoatmaterial gesprüht werden.

21. Vorrichtung nach einem der Ansprüche 15 bis 20, **dadurch gekennzeichnet, dass** ein Hilfsmittel vorgesehen ist, das sich nach der Entfernung aus der Beschichtungsanlage zur Verwertung bei der thermischen Herstellung von Ziegeln oder Zement oder anderen Gegenständen mit anorganischen Bestandteilen eignet.

## Claims

1. Method of separating overspray of a liquid coating material from an air or other gas flow flowing through an application region (108) of a system for coating workpieces, wherein the overspray which has passed into the gas flow in the application region (108) is charged with at least one auxiliary agent introduced into the gas flow,
**characterized in that** a particulate material or a fluid which reacts chemically with the overspray is used at least in part as auxiliary agent for bonding the overspray.

2. The method according to claim 1, **characterized in that** a mixture of two or more different substances is used as auxiliary agent.

3. The method according to any one of the preceding claims, **characterized in that** one or more liquid or gaseous, chemically reactive fluids are used in addition to particulate pre-coat material and are sprayed into the air or gas flow acting upon the overspray and/or into the pre-coat material.

4. The method according to any one of the preceding claims, **characterized in that** chemically reactive particles are used which are selected from amine, epoxy, carboxyl, hydroxyl or isocyanate groups or have such reactive group on their surface.

5. The method according to any one of the preceding claims, **characterized in that** chemically reactive particles are used which consist of aluminium oxide, which has been post-treated with octylsilane, or which particles have this substance on their surface.

6. The method according to any one of the preceding claims, **characterized in that** solid or liquid monomers, oligomers or polymers or silanes, silanols or siloxanes are used.

7. The method according to any one of the preceding claims, **characterized in that** hydrolysed amine or other solutions containing reactive liquids including reactive molecules or substances are used as liquid fluid.

8. The method according to any one of the preceding claims, **characterized in that** particles having a fibre or hollow space structure are used at least in part as auxiliary agent for bonding the overspray.

9. The method according to any one of the preceding claims, **characterized in that** zeolites or other hollow bodies consisting of polymers, glass or aluminium silicate are used as particles having a hollow space structure.

10. The method according to any one of the preceding claims, **characterized in that** aluminium oxide and/or pyrogenic silicic acid and/or other additives for improving the flowability and/or fluidisation capability are added to the auxiliary agent.

11. The method according to any one of the preceding claims, **characterized in that** the gas flow for separating the overspray particles is guided through a filter device (168).

12. The method according to any one of the preceding claims or according to the preamble of claim 1, **characterized in that** an auxiliary agent is selected which after removal from the coating system is suitable for utilization for purposes other than the coating of workpieces.

13. The method according to claim 12, **characterized in that** the used auxiliary material is used as an insulating material.

14. The method according to claim 12, **characterized in that** the used auxiliary material is used in the thermal production of bricks or cement or other objects having inorganic components.

15. A device for separating overspray of a liquid coating material from an air or other gas flow flowing through an application region (108) of a system for coating workpieces, having a separating device (168), in which the overspray which has passed into the gas flow in the application region (108) is charged with at least one auxiliary agent introduced into the gas flow,
**characterized in that** a particulate material or a fluid which reacts chemically with the overspray is provided at least in part as auxiliary agent for bonding the overspray.

16. The device according to claim 15, **characterized in that** the separating device (168) contains filter elements (170, 172), through which the gas flow is guided.

17. The device according to claim 15 or 16, **characterized in that** a mixture of two or more different substances is provided as auxiliary agent.

18. The device according to any one of claims 15 to 17, **characterized in that** chemically reactive particles are provided which are selected from amine, epoxy, carboxyl, hydroxyl or isocyanate groups or have such reactive group on their surface.

19. The device according to any one of claims 15 or 18, **characterized in that** solid or liquid monomers, oligomers or polymers or silanes, silanols or siloxanes are provided.

20. The device according to any one of claims 15 to 19, **characterized in that** one or more liquid or gaseous chemically reactive fluids are used in addition to particulate pre-coat material and are preferably sprayed by nozzles into the air or gas flow acting upon the overspray and/or into the pre-coat material.

21. The device according to any one of claims 15 to 20, **characterized in that** an auxiliary agent is provided which after removal from the coating system is suitable for utilization in the thermal production of bricks or cement or other objects having inorganic components.

## Revendications

1. Procédé pour extraire l'excès de projection d'un matériau de revêtement liquide hors d'un flux d'air ou d'un flux d'un autre gaz circulant à travers une zone d'application (108) d'une installation de revêtement de pièces, l'excès de projection, parvenu dans le flux de gaz dans la zone d'application (108), étant alimenté par au moins un adjuvant introduit dans le flux de gaz,
**caractérisé en ce que** l'adjuvant utilisé pour lier l'excès de projection est au moins en partie un matériau particulaire ou un fluide réagissant chimiquement avec l'excès de projection.

2. Procédé selon la revendication 1, **caractérisé en ce que** l'adjuvant utilisé est un mélange formé de deux substances différentes ou plus.

3. Procédé selon l'une quelconque des revendications précédentes, **caractérisé en ce qu'**un ou plusieurs fluides chimiquement réactifs, liquides ou gazeux, sont utilisés en plus du matériau particulaire pour sous-couche et sont pulvérisés dans le flux d'air ou le flux de gaz alimentant l'excès de projection et/ou dans le matériau de sous-couche.

4. Procédé selon l'une quelconque des revendications précédentes, **caractérisé en ce que** l'on utilise des particules chimiquement réactives, qui sont choisies dans les groupes des amines, des époxys, des carboxyles, des hydroxyles ou des isocyanates ou qui possèdent un tel groupe réactif sur leur surface.

5. Procédé selon l'une quelconque des revendications précédentes, **caractérisé en ce que** l'on utilise des particules chimiquement réactives, qui sont formées par un oxyde d'aluminium traité ultérieurement avec un octylsilane ou qui possèdent cette substance sur leur surface.

6. Procédé selon l'une quelconque des revendications précédentes, **caractérisé en ce que** l'on utilise des monomères, des oligomères ou des polymères ou des silanes, des silanoles ou des siloxanes solides ou liquides.

7. Procédé selon l'une quelconque des revendications précédentes, **caractérisé en ce que** le fluide liquide utilisé est une amine hydrolysée ou d'autres liquides réactifs, y compris des solutions contenant des molécules ou substances réactives.

8. Procédé selon l'une quelconque des revendications précédentes, **caractérisé en ce que** pour l'adjuvant destiné à absorber l'excès de projection, on utilise au moins en partie des particules avec une structure fibreuse ou une structure poreuse.

9. Procédé selon l'une quelconque des revendications précédentes, **caractérisé en ce que** les particules à structure poreuse utilisées sont des zéolithes ou d'autres corps creux formés par des polymères, du verre ou du silicate d'aluminium.

10. Procédé selon l'une quelconque des revendications précédentes, **caractérisé en ce qu'**à l'adjuvant on ajoute un oxyde d'aluminium et/ou de l'acide silique pyrogéné et/ou d'autres additifs destinés à améliorer la fluidité et/ou la capacité de fluidification.

11. Procédé selon l'une quelconque des revendications précédentes, **caractérisé en ce que** le flux de gaz destiné à extraire les particules d'un excès de projection est guidé à travers un dispositif de filtrage (168).

12. Procédé selon l'une quelconque des revendications précédentes ou selon le préambule de la revendication 1, **caractérisé en ce que** l'on choisit un adjuvant qui, après avoir été évacué hors de l'installation de revêtement, peut être utilisé à d'autres fins que le revêtement de pièces.

13. Procédé selon la revendication 12, **caractérisé en ce que** l'adjuvant usager est utilisé comme matériau isolant.

14. Procédé selon la revendication 12, **caractérisé en ce que** l'adjuvant usager est utilisé lors de la fabrication thermique de briques ou de ciment ou d'autres objets avec des composants anorganiques.

15. Dispositif pour extraire l'excès de projection d'un matériau de revêtement liquide hors d'un flux d'air ou d'un flux d'un autre gaz circulant à travers une zone d'application (108) d'une installation de revêtement de pièces,
comportant un dispositif de séparation (168), dans lequel l'excès de projection, parvenu dans le flux de gaz dans la zone d'application (108), est alimenté par au moins un adjuvant introduit dans le flux de gaz,
**caractérisé en ce que** pour l'adjuvant utilisé pour lier l'excès de projection, il est prévu au moins en partie un matériau particulaire ou un fluide réagissant chimiquement avec l'excès de projection.

16. Dispositif selon la revendication 15, **caractérisé en ce que** le dispositif de séparation (168) contient des éléments de filtrage (170, 172), à travers lesquels est guidé le flux de gaz.

17. Dispositif selon la revendication 15 ou 16, **caractérisé en ce que** pour l'adjuvant, il est prévu un mélange formé de deux substances différentes ou plus.

18. Dispositif selon l'une quelconque des revendications 15 à 17, **caractérisé en ce qu'**il est prévu des particules chimiquement réactives, qui sont choisies dans les groupes des amines, des époxys, des carboxyles, des hydroxyles ou des isocyanates ou possèdent un tel groupe réactif sur leur surface.

19. Dispositif selon la revendication 15 ou 18, **caractérisé en ce qu'**il est prévu des monomères, des oligomères ou des polymères ou des silanes, des silanoles ou des siloxanes solides ou liquides.

20. Dispositif selon l'une quelconque des revendications 15 à 19, **caractérisé en ce qu'**un ou plusieurs fluides chimiquement réactifs, liquides ou gazeux, sont utilisés en plus du matériau particulaire pour sous-couche et sont pulvérisés, de préférence, via des buses dans le flux d'air ou le flux de gaz alimentant l'excès de projection et/ou dans le matériau de sous-couche.

21. Dispositif selon l'une quelconque des revendications 15 à 20, **caractérisé en ce qu'**il est prévu un adjuvant qui, après avoir été évacué hors de l'installation de revêtement, peut être utilisé lors de la fabrication thermique de briques ou de ciment ou d'autres objets avec des composants anorganiques.
